# EUROPÄISCHE PATENTSCHRIFT

(11) **EP 2 332 220 B1**
(45) Veröffentlichungstag und Bekanntmachung des Hinweises auf die Patenterteilung: **06.01.2016**
(21) Anmeldenummer: 09783786.8
(22) Anmeldetag: 06.10.2009
(51) Int. Cl.: H01R 13/66, H01R 13/703, H02J 7/00, H02M 1/10, H01R 29/00

(54) **STECKERNETZTEIL**
MAINS PLUG COMPONENT
BLOC D'ALIMENTATION ENFICHABLE

(30) Priorität: 10.10.2008 DE 102008051247
(43) Veröffentlichungstag der Anmeldung: 15.06.2011
(73) Patentinhaber: Logicdata Electronic & Software Entwicklungs GmbH, 8530 Deutschlandsberg (AT)
(72) Erfinder: KOCH, Walter, A-8541 Schwanberg (AT)
(74) Vertreter: Epping - Hermann - Fischer
(86) Internationale Anmeldenummer: PCT/EP2009/062971
(87) Internationale Veröffentlichungsnummer: WO 2010/040745

(56) Entgegenhaltungen:
- WO-A1-98/08294
- WO-A2-2007/087652
- DE-A1- 10 343 925
- US-A- 5 973 948
- US-B1- 6 286 441

## Beschreibung

Die Erfindung betrifft ein Steckernetzteil mit einem Schaltnetzteil, welches insbesondere zur Spannungsversorgung eines elektrisch verstellbaren Möbels oder anderer elektrischer Verbraucher in einem Möbel geeignet ist.

Es werden zunehmend elektrisch verstellbare Möbel angeboten. So ist bei vielen Tischen, insbesondere bei Schreibtischen, die Höhe der Tischplatte über einen speziellen Antrieb elektrisch verstellbar. Auch Betten, beispielsweise Komfortbetten oder Krankenhausbetten, lassen sich über elektrische Antriebe etwa in Höhe oder Neigungswinkel des Bettes einstellen. Ferner finden sich in Möbeln zunehmend weitere elektrische Verbraucher wie zum Beispiel eine Heizmatte oder Vibrationsmotoren in Betten oder Komfortsesseln.

Bei elektrisch verstellbaren Möbeln ist es möglich, Gleichstrommotoren für den Antrieb der elektrischen Verstelleinrichtung einzusetzen, die mit einer Niederspannung betrieben werden. Dafür wird die Netzspannung beispielsweise über einen Transformator in den niedrigeren Spannungsbereich der Gleichstrommotoren herabgesetzt und über eine Gleichrichterschaltung in eine Gleichspannung umgewandelt. Die Ansteuerung der Gleichstrommotoren in der Steuerung kann durch ein gesteuertes Verbinden der Motoren mit der so erzeugten Gleichspannung erfolgen. Die Steuerung kann alternativ auch durch ein Schaltnetzteil mit einer Gleichspannung versorgt werden, welche dem niedrigeren Spannungsbereich der Motoren entspricht. Beispielsweise kann ein Schaltnetzteil in einem Steckernetzgerät eingebaut sein. Da nicht in allen Bereichen der Welt mit derselben Netzwechselspannung gearbeitet wird, kann es erforderlich sein, unterschiedliche Schaltnetzteile für unterschiedliche Netzspannungen bereitzustellen. So wird zum Beispiel im Großteil Europas eine Netzspannung von etwa 230 Volt zur Verfügung gestellt, während in Nordamerika die Netzspannung etwa 110 Volt beträgt. Damit ein Schaltnetzteil in beiden Spannungsbereichen verwendet werden kann, kann eine elektronische Detektionsschaltung vorgesehen werden, welche den jeweils vorhandenen Spannungsbereich erkennt und das Schaltnetzteil in einen entsprechenden Betriebsmodus schaltet. Eine derartige Detektionsschaltung erhöht jedoch den Produktionsaufwand und damit die Kosten des Schaltnetzteils.

Ferner kann über einen Handwahlschalter ein bestimmter Spannungsbereich ausgewählt werden, in dem das Schaltnetzteil betrieben wird. Hierbei kann es jedoch bei einer fehlerhaften Bedienung des Handschalters beziehungsweise bei einer fehlerhaften Auswahl des Spannungsbereichs zu einer Beschädigung oder Zerstörung des Schaltnetzteils kommen.

Beispielsweise ist aus dem Dokument US 5,973,948 ein Steckernetzteil mit austauschbarem Steckerteil bekannt, bei dem ein enthaltener Transformator entsprechend dem verwendeten Steckerteil in unterschiedlicher Weise mit der Netzwechselspannung versorgt wird. An dem Steckernetzteil sind dazu Anschlusskontakte zur Zuführung der Netzwechselspannung vorgesehen. Zudem ist neben den Anschlusskontakten ein elektromechanischer Schalter vorgesehen, der durch besondere Ausgestaltung eines Steckerteils betätigt werden kann, um den verwendeten Spannungsbereich auszuwählen.

Der Erfindung liegt die Aufgabe zugrunde, ein kostengünstiges Steckernetzteil mit einem Schaltnetzteil bereitzustellen, welches eine Verwendung in unterschiedlichen Netzwechselspannungsbereichen ermöglicht.

Diese Aufgabe wird mit dem Gegenstand des unabhängigen Patentanspruchs gelöst. Ausgestaltungsformen und Weiterbildungen der Erfindung sind Gegenstand der abhängigen Patentansprüche.

Bei einer beispielhaften Ausführungsform eines Steckernetzteils mit einem Gehäuse und einem im Gehäuse angeordneten Schaltnetzteil umfasst das Schaltnetzteil eine erste Stufe, die zur Gleichrichtung einer Netzwechselspannung eingerichtet ist, und eine zweite Stufe, die zur Abgabe wenigstens einer aus der gleichgerichteten Netzwechselspannung erzeugten Gleichspannung eingerichtet ist. In der ersten Stufe ist ein Schalter vorgesehen, über den ein erster Netzspannungsbereich oder ein zweiter Netzspannungsbereich ausgewählt werden kann. Das Gehäuse weist eine Aufnahme für ein Steckerteil auf. Die Netzwechselspannung wird hierbei der ersten Stufe über das jeweils aufgenommene Steckerteil zugeführt.

Der Schalter der ersten Stufe ist als elektromechanischer oder elektronischer Schalter ausgebildet und das Steckerteil weist Mittel zur Betätigung des Schalters auf, welche in Abhängigkeit des jeweils aufgenommenen Steckerteils auslösbar sind.

Für das Steckernetzteil können somit unterschiedliche Steckerteile bereitgestellt werden, die für das Einstecken in entsprechende Netzsteckdosen geeignet sind, wobei üblicherweise ein direkter Zusammenhang zwischen dem verwendeten Netzspannungsbereich und dem Stecker- beziehungsweise Steckdosentyp gegeben ist, wobei eine vorschriftsmäßige Elektroinstallation vorausgesetzt wird. Die Steckerteile können demnach so ausgebildet sein, dass in Abhängigkeit des jeweiligen Netzspannungsbereichs der Schalter in der ersten Stufe des Schaltnetzteils betätigt wird oder nicht. Anders ausgedrückt wird der erste oder der zweite Netzspannungsbereich in der ersten Stufe in Abhängigkeit des jeweils aufgenommenen Steckerteils ausgewählt.

Durch den Einsatz eines einfachen elektromechanischen oder elektronischen Schalters, der direkt zwischen dem ersten und zweiten Spannungsbereich umschaltet, können das Schaltnetzteil beziehungsweise das Steckernetzteil mit geringem schaltungstechnischem Aufwand und daher kostengünstig hergestellt werden. Des Weiteren kann durch die vorgegebene Abhängigkeit des jeweils verwendeten Steckernetzteils vom Netzspannungsbereich sichergestellt werden, dass das Schaltnetzteil im korrekten Netzspannungsbereich betrieben wird.

Beispielsweise weist die Aufnahme eine Aussparung auf, die geeignet ist, einen Zapfen eines aufgenommenen Steckerteils derart aufzunehmen, dass der Schalter durch den aufgenommenen Zapfen betätigt wird. Hierbei weist ein Steckerteil für den ersten Spannungsbereich beispielsweise keinen derartigen Zapfen auf, so dass der Schalter nicht betätigt wird. Ein Steckerteil für den zweiten Spannungsbereich hingegen weist den Zapfen auf, welcher den Schalter betätigt und damit das Schaltnetzteil in einen Betrieb in dem zweiten Netzspannungsbereich umschaltet.

Vorzugsweise ist die Aussparung hierbei derart angeordnet, dass die Aussparung durch ein aufgenommenes Steckerteil abgedeckt ist. Dadurch kann verhindert werden, dass der Schalter bei aufgenommenem Steckerteil manuell durch einen Benutzer betätigt wird, um die automatische Auswahl des Netzspannungsbereichs zu umgehen. Somit ist wiederum ein sicherer Betrieb des Steckernetzteils gewährleistet.

In einer Ausführungsform ist die erste Stufe des Schaltnetzteils eingerichtet, in einem offenen Zustand des Schalters eine Gleichrichtung einer Netzwechselspannung aus dem ersten Netzspannungsbereich ohne eine Spannungsverdopplung durchzuführen und in einen geschlossenen Zustand des Schalters eine Gleichrichtung einer Netzwechselspannung aus dem zweiten Netzspannungsbereich mit einer Spannungsverdopplung durchzuführen. Vorzugsweise ist dabei der erste Netzspannungsbereich höher als der zweite Netzspannungsbereich. Beispielsweise entspricht der erste Netzspannungsbereich einer Netzwechselspannung von 230 Volt, während der zweite Netzspannungsbereich einer Netzwechselspannung von 110 Volt entspricht.

Ein Gleichrichter in der ersten Stufe ist beispielsweise so ausgeführt, dass bei offenem Schalter eine Brückengleichrichtung der Netzwechselspannung durchgeführt wird, wobei die resultierende Gleichspannung in ihrer Höhe im Wesentlichen mit der Amplitude der Netzwechselspannung übereinstimmt. Anders ausgedrückt findet hierbei keine Spannungsverdopplung statt. Der Gleichrichter in der ersten Stufe ist ferner so ausgestaltet, dass bei geschlossenem Schalter zwei Einweggleichrichtungen durchgeführt werden, wobei die jeweils resultierenden gleichgerichteten Spannungen aufsummiert werden. Anders ausgedrückt erfolgt in diesem Fall eine Spannungsverdopplung.

In verschiedenen Ausführungsformen ist die Aufnahme des Steckernetzteils dazu eingerichtet, das Steckerteil mittels einer Verbindung, z.B. einer Schnappverbindung, einer Steckverbindung, einer Schiebeverbindung oder einer Schraubverbindung am Gehäuse zu befestigen. Somit kann ein unbeabsichtigtes Lösen des Steckerteils vom Gehäuse des Steckernetzteils vermieden werden. Grundsätzlich ist das Steckerteil aber vom Gehäuse lösbar.

In einer Ausführungsform, in der für das lösbare Steckerteil eine Betätigung des Schalters nicht vorgesehen ist, umfasst das Steckernetzteil eine elektronische Detektorschaltung, mit der die Höhe der Netzwechselspannung detektiert wird. Die Detektorschaltung ist in einer Ausführung als Spitzenwertdetektorschaltung ausgebildet. Die Detektorschaltung aktiviert Abhängigkeit von der Erkennung des zweiten Netzspannungsbereichs eine nachgeschaltete Steuerschaltung, die ihrerseits einen elektronisch ausgeführten Schalter, insbesondere einen Triac, schließt, um aus dem zweiten Netzspannungsbereich eine Gleichrichtung mit einer Spannungsverdopplung durchzuführen.

In einer Ausführungsform umfasst das Steckernetzteil eine Schnittstelle mit wenigstens einer Versorgungsleitung zur Abgabe der wenigstens einen Gleichspannung und mit wenigstens einer Signalleitung. Anders ausgedrückt können über die Schnittstelle nicht nur eine oder mehrere aus der gleichgerichteten Netzwechselspannung erzeugten Gleichspannungen abgegeben werden, sondern auch Steuersignale abgegeben und/oder empfangen werden.

Beispielsweise umfasst das Steckernetzteil wenigstens ein Eingabeelement, dessen Zustand über die wenigstens eine Signalleitung abgebbar ist. Vorzugsweise ist ein derartiges Eingabeelement als einfacher Taster ausgeführt, wobei über die wenigstens eine Signalleitung signalisiert wird, ob der Taster gedrückt ist oder nicht.

Ferner kann das Steckernetzteil ein Anzeigeelement umfassen, das über die wenigstens eine Signalleitung ansteuerbar ist. Beispielsweise ist das Anzeigeelement als Lampe oder Leuchtdiode ausgeführt, wobei über die Signalleitung angesteuert wird, ob die Lampe oder LED leuchten soll oder nicht. Somit kann beispielsweise von einem an das Steckernetzteil angeschlossenen Gerät eine Statusinformation an das Steckernetzteil übermittelt werden, welche über das Anzeigeelement angezeigt wird.

In einer weiteren Ausführungsform umfasst das Steckernetzteil einen Mikrocontroller, der eingerichtet ist, über die wenigstens eine Signalleitung an ein Bussystem angeschlossen zu werden. Über den Mikrocontroller lassen sich beispielsweise weitere Funktionen des Schaltnetzteils steuern, so etwa, ob und welche Spannung als Gleichspannung abgegeben wird. Auch eine Spannungshöhe der Gleichspannung kann so gesteuert werden. Bei Verwendung mehrerer derartiger Steckernetzteile können diese bei Anschluss an das Bussystem über eine zentrale Steuerung verwaltet werden.

In einer weiteren Ausführungsform ist das Schaltnetzteil dazu eingerichtet, in einen Ruhebetriebszustand gesteuert zu werden, wobei die Ansteuerung über die wenigstens eine Signalleitung erfolgt. In dem Ruhebetriebszustand wird beispielsweise eine Steuerung von Schaltvorgängen in der zweiten Stufe abgeschaltet, so dass bei nicht benötigter Ausgangsgleichspannung das Auftreten von Verlustleistung infolge unnötiger Schaltvorgänge minimiert wird. Vorzugsweise befindet sich hierbei das Schaltnetzteil jedoch in einem Zustand, welcher einen schnellen Wechsel in einen Normal- oder Leistungsbetriebszustand ermöglicht.

In einem weiteren Ausführungsbeispiel umfasst das Steckernetzteil wenigstens ein Sensorelement, dessen Zustand über die wenigstens eine Signalleitung abgebbar ist. Beispielsweise kann im Steckernetzteil ein Temperatursensor vorgesehen werden, welcher die Betriebstemperatur des Schaltnetzteils misst. Das entsprechende Messergebnis kann in analoger oder digitaler Form über die Schnittstelle abgegeben werden. Alternativ oder zusätzlich kann eine Spannungsdetektionsschaltung im Steckernetzteil vorgesehen sein, welche feststellt, ob das Schaltnetzteil eingangsseitig mit einer ausreichenden Netzwechselspannung versorgt wird. Das Detektionsergebnis kann beispielsweise als logisches Signal über die Schnittstelle abgegeben werden.

In einer weiteren Ausführungsform umfasst das Steckernetzteil eine Anschlussbuchse, über die sämtliche Leitungen der Schnittstelle aus dem Gehäuse herausgeführt werden. Somit wird ermöglicht, dass sowohl die wenigstens eine Gleichspannung als auch Steuer- und/oder Sensorsignale durch Anschluss eines einzelnen Steckverbinders mit geringem Aufwand aus dem Steckernetzteil herausgeführt werden können.

Das Steckernetzteil ist vorzugsweise für eine Spannungsversorgung eines elektronischen Systems eingerichtet, welches zur Verstellung eines verstellbaren Möbels und/oder zur Steuerung eines in ein Möbel eingebauten Verbrauchers geeignet ist. Durch die einfache Bauweise des Steckernetzteils kann eine Energieversorgung für das elektronische System für Möbel flexibel und mit geringem Aufwand erfolgen.

Die Erfindung wird nachfolgend an Ausführungsbeispielen anhand der Figuren näher erläutert. Funktions- beziehungsweise wirkungsgleiche Elemente tragen dabei gleiche Bezugszeichen.

Es zeigen:
- Figur 1: ein erstes Ausführungsbeispiel eines Steckernetzteils,
- Figur 2: ein zweites Ausführungsbeispiel eines Steckernetzteils,
- Figur 3: ein Ausführungsbeispiel einer Möbelsteuerung mit einem Steckernetzteil,
- Figur 4: ein Ausführungsbeispiel einer Schnittstelle eines Steckernetzteils,
- Figur 5: ein beispielhafter Ausschnitt eines Blockschaltbilds eines Schaltnetzteils, und
- Figur 6: ein Ausführungsbeispiel eines elektrisch verstellbaren Tisches.

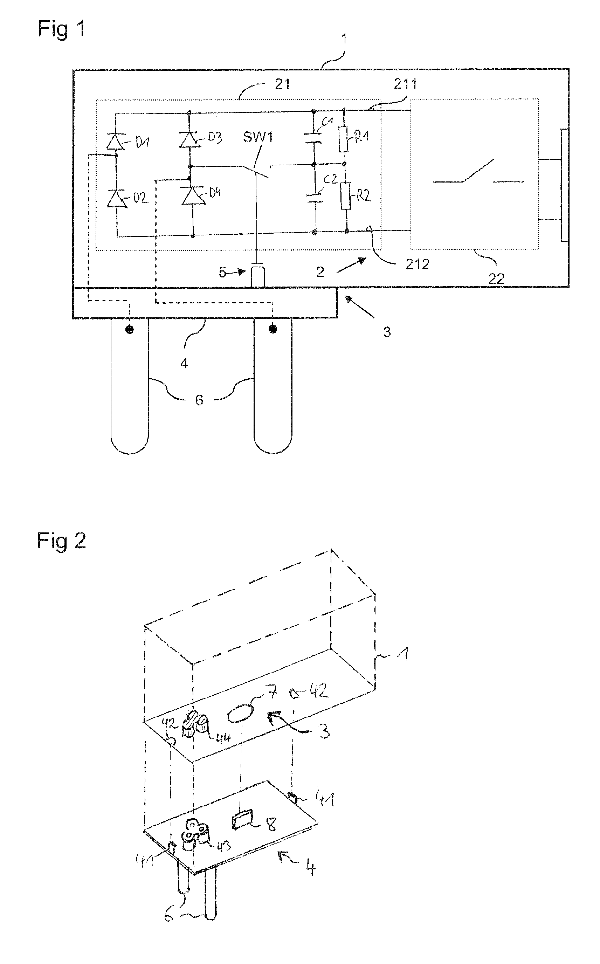

Figur 1 zeigt ein Ausführungsbeispiel eines Steckernetzteils mit einem Gehäuse 1 und einem im Gehäuse 1 angeordneten Schaltnetzteil 2. Das Schaltnetzteil 2 weist eine erste Stufe 21 und eine zweite Stufe 22 auf. Dabei ist die erste Stufe 21 eingangsseitig an Stifte 6 zur Zuführung einer Netzwechselspannung und ausgangsseitig über Anschlüsse 211, 212 an die zweite Stufe 22 angeschlossen. Ausgänge der zweiten Stufe 22 bilden einen Gleichspannungsausgang des Schaltnetzteils 2 beziehungsweise des Steckernetzteils. Die Stifte 6 sind in einem Steckerteil 4 befestigt, welches über eine Aufnahme 3 mit dem Gehäuse 1 des Steckernetzteils verbunden ist.

Die erste Stufe 21 des Schaltnetzteils 2 weist vier Gleichrichterdioden D1, D2, D3, D4 auf, welche ähnlich wie ein Brückengleichrichter verschaltet sind. Insbesondere ist eine Serienschaltung der ersten und zweiten Diode D1, D2 sowie eine Serienschaltung der dritten und vierten Diode D3, D4 zwischen die Anschlüsse 211, 212 geschaltet. Ferner ist eine Serienschaltung eines ersten und eines zweiten Kondensators C1, C2 zwischen die Anschlüsse 211, 212 geschaltet. Parallel zum ersten Kondensator C1 ist ein erster Widerstand R1 angeordnet. In ähnlicher Weise ist parallel zum zweiten Kondensator C2 ein zweiter Widerstand R2 vorgesehen.

Die erste Stufe 21 weist ferner einen elektromechanischen oder elektronischen Schalter SW1 auf, der den Verbindungsknoten zwischen der dritten und vierten Diode D3, D4 mit dem Verbindungsknoten des ersten und zweiten Kondensators C1, C2 beziehungsweise des ersten und zweiten Widerstands R1, R2 verbindet. Der Schalter SW1 ist, z.B. mechanisch oder optisch oder auf andere Weise, über Betätigungsmittel 5 betätigbar, welche in Abhängigkeit eines jeweils aufgenommenen Steckerteils 4 auslösbar sind. Der Schalter SW1 ist vorzugsweise als Mikroschalter ausgeführt.

Drosselspulen oder andere Sicherungselemente, die üblicherweise zwischen einen Gleichrichtereingang und Netzspannungsanschlüsse geschaltet werden, sind hier lediglich aus Übersichtsgründen nicht dargestellt.

Über den Schalter SW1 können in der ersten Stufe 21 eine erste oder eine zweite Betriebsart beziehungsweise ein erster Netzspannungsbereich oder ein zweiter Netzspannungsbereich ausgewählt werden. Beispielsweise ist in der ersten Betriebsart der Schalter SW1 in einer geöffneten Stellung, so dass keine elektrische Verbindung zwischen den Knoten der Kondensatoren C1, C2 beziehungsweise Widerstände R1, R2 und den Verbindungsknoten der Dioden D3, D4 besteht. In diesem Fall arbeitet die von der ersten Stufe 21 umfasste Schaltung als Brückengleichrichter, mit dem die eingangsseitig anliegende Netzwechselspannung in eine an den Anschlüssen 211, 212 anliegende Gleichspannung als Zwischenspannung umgewandelt wird.

Die Kondensatoren C1, C2 dienen dabei in bekannter Weise zur Speicherung elektrischer Energie und zur Glättung der bereitgestellten Zwischenspannung. Um einen Spannungsabfall über die Kondensatoren C1, C2 gleichmäßig verteilen zu können, kann über die Widerstände R1, R2 ein Potenzialausgleich erfolgen, was schaltungstechnisch in etwa einem kompensierten kapazitivem Spannungsteiler entspricht. Vorzugsweise weisen die Widerstände R1, R2 dazu gleiche beziehungsweise nahezu gleiche Widerstandswerte auf. Weiterhin sind auch Kapazitätswerte der Kondensatoren C1, C2 vorzugsweise annähernd gleich groß. Der Wert der ausgangsseitigen Zwischenspannung an den Anschlüssen 211, 212 ergibt sich in bekannter Weise aus der Spannungsamplitude der eingangsseitig anliegenden Netzwechselspannung, welche im europäischen Raum ungefähr 400 Volt beträgt.

In der zweiten Betriebsart ist der Schalter SW1 in einem geschlossenen Zustand. Dies kann beispielsweise dadurch bewirkt werden, dass ein Steckerteil 4 verwendet wird, welches die Mittel 5 zur Betätigung des Schalters SW1 auslöst. In diesem Fall ist der Verbindungsknoten der Dioden D3, D4 elektrisch mit dem Verbindungsknoten der Kondensatoren C1, C2 und dem Verbindungsknoten der Widerstände R1, R2 verbunden. Dadurch ergibt sich mit den Dioden D1, D2 jeweils eine Einweggleichrichtung, bei der sowohl der erste als auch der zweite Kondensator C1, C2 auf den Wert der Spannungsamplitude der eingangsseitig anliegenden Netzwechselspannung aufgeladen werden. Die Dioden D3, D4 werden hierbei in Sperrrichtung betrieben. Dementsprechend ergibt sich zwischen den Anschlüssen 211, 212 über die Kondensatoren C1, C2 ungefähr eine Verdopplung der eingangsseitig anliegenden Spannungsamplitude. Beispielsweise wird bei einer eingangsseitig anliegenden effektiven Netzwechselspannung von etwa 115 Volt jeder der Kondensatoren C1, C2 auf einen Spannungswert von zirka 200 Volt aufgeladen. Dadurch ergibt sich zwischen den Anschlüssen 211, 212 als resultierende Gleichspannung eine Zwischenspannung von zirka 400 Volt. Diese Spannung entspricht demnach im Wesentlichen der Ausgangsgleichspannung beziehungsweise Zwischenspannung der ersten Stufe in der ersten Betriebsart beziehungsweise im ersten Netzspannungsbereich bei einer effektiven Eingangsspannung von 230 Volt. Somit kann für verschiedene Spannungswerte von Eingangswechselspannungen eine ungefähr gleich große Ausgangsgleichspannung beziehungsweise Zwischenspannung an den Anschlüssen 211, 212 bereitgestellt werden.

Für die genannten Netzspannungsbereiche von etwa 230 Volt für den ersten Netzspannungsbereich und etwa 110 Volt für den zweiten Netzspannungsbereich, existieren jeweilige genormte Steckertypen, welche eindeutig dem jeweiligen Netzspannungsbereich zugeordnet sind. Beispielsweise werden in Deutschland für den ersten Netzspannungsbereich von 230 Volt Steckertypen C, Typbezeichnung CEE 7/16 beziehungsweise CEE 7/17, sowie Steckertypen E und F, Typbezeichnung CEE 7/7 verwendet. Hingegen werden im nordamerikanischen Raum für den zweiten Netzspannungsbereich von etwa 110 Volt Steckertypen A, Typbezeichnung NEMA 1-15, oder B, Typbezeichnung NEMA 5-15, eingesetzt. Dementsprechend kann für das Steckernetzteil für den Einsatz in Deutschland ein Steckerteil 4 vorgesehen werden, welches beispielsweise Stifte 6 gemäß dem Steckertyp C aufweist. Hierbei ist das Steckerteil 4 so ausgeführt, dass der Schalter SW1 über die Betätigungsmittel 5 nicht betätigt wird und somit keine Spannungsverdopplung bei der Gleichrichtung stattfindet.

Hingegen kann für den Einsatz im nordamerikanischen Raum ein Steckerteil 4 mit Stiften 6 vorgesehen werden, welche dem Steckertyp A oder B entsprechen. Hierbei ist das Steckerteil 4 so ausgeführt, dass der Schalter SW1 über die Betätigungsmittel 5 in einem geschlossenen Zustand gebracht wird, um so eine Gleichrichtung mit Spannungsverdopplung in der ersten Stufe 21 zu bewirken.

Die von der ersten Stufe 21 bereit gestellte Zwischenspannung wird in der zweiten Stufe 22 im geschalteten Betrieb, ausgedrückt durch das Schaltersymbol der zweiten Stufe 22, in eine abzugebende Gleichspannung umgesetzt. In weiteren Ausführungsformen ist die zweite Stufe 22 eingerichtet, mehrere Gleichspannungen unterschiedlicher Höhe aus der Zwischenspannung zu erzeugen, beispielsweise eine erste Gleichspannung und eine zweite Gleichspannung, welche ausgangsseitig abgegeben werden.

Figur 2 zeigt ein weiteres Ausführungsbeispiel eines Steckernetzteils mit einem Steckerteil 4, das von der Aufnahme 3 des Gehäuses 1 aufgenommen wird. Das Schaltnetzteil 2 selbst ist aus Übersichtsgründen in Figur 2 nicht dargestellt. Das Gehäuse 1 weist hierzu an seiner Unterseite eine Aufnahme 3 mit Aussparungen 42 zur Befestigung des Steckerteils 4, einer Steckerbuchse 44 und einer Aussparung 7 auf.

Das aufzunehmende Steckerteil 4 weist Stifte 6, Verbinder 41, einen Steckeraufsatz 43 sowie einen Zapfen 8 auf. Über die Verbindung 41, 42, die als Schnappverbindung ausgebildet ist, kann das Steckerteil am Gehäuse 1 befestigt werden. Der Steckeraufsatz 43 weist eine hier nicht dargestellte elektrische Verbindung zu den Stiften 6 auf. Der Steckeraufsatz 43 kann beispielsweise als Kleeblattstecker gemäß der Norm IEC-60320-C5 ausgeführt sein, der wegen seiner Form auch als "Mickey Mouse-Stecker" bekannt ist. Die Steckerbuchse 44 ist dementsprechend zur Aufnahme des Steckeraufsatzes 43 eingerichtet. Wiederum nicht dargestellt ist hier aus Übersichtsgründen eine elektrische Verbindung der Steckerbuchse 44 mit dem Eingang der ersten Stufe 21.

Der Zapfen 8 kann als einfache Erhebung auf dem Steckerteil ausgeführt sein, beispielsweise auch als Stift oder Turm. Vorzugsweise ist der Zapfen 8 dabei aus Kunststoff gefertigt, beispielsweise in Spritzguss zusammen mit dem übrigen Steckerteil 4.

Wenn das Steckerteil 4 am Gehäuse 1 befestigt ist, tritt der Zapfen 8 durch die Aussparung 7 in das Gehäuse 1 ein. Der Schalter SW1 ist dabei im Gehäuse 1 so über der Aussparung 7 angeordnet, dass er mechanisch durch den Zapfen 8 betätigt wird und sich damit in einem geschlossenen Zustand befindet. Es ist selbsterklärend, dass in diesem Fall die Stifte 6 einem Steckertyp entsprechen, der für eine Verwendung mit einer Netzwechselspannung von etwa 110 Volt vorgesehen ist. Wenn jedoch Stifte 6 vorgesehen wären, die einem Steckertyp für eine Netzwechselspannung von etwa 230 Volt entsprechen, würde das Steckerteil 4 keinen entsprechenden Zapfen 8 aufweisen, damit der Schalter SW1 gerade nicht mechanisch betätigt wird und eine Spannungsverdopplung im Gleichrichter in der ersten Stufe 21 ausgeschlossen ist.

Wie in Figur 2 gezeigt, ist das Steckerteil 4 vorzugsweise so ausgeführt, dass die Aussparung 7 im Gehäuse 1 bei befestigtem Steckerteil in jedem Fall abgedeckt ist. Damit kann verhindert werden, dass ein Benutzer des Steckernetzteils bei aufgenommenem Steckerteil die Möglichkeit hat manuell auf den Schalter SW1 einzuwirken und eine Gleichrichtung mit einer Spannungsverdopplung herbeizuführen, obwohl diese für den vorhandenen Netzspannungsbereich nicht notwendig beziehungsweise zulässig ist. Dadurch kann eine Beschädigung oder Zerstörung des Steckernetzteils beziehungsweise des Schaltnetzteils 2 vermieden werden.

Alternativ können Zapfen 8 und Aussparung 7 auch im Bereich des Steckeraufsatzes 43 und der Steckerbuchse 44 angeordnet sein, beispielsweise als Zapfen direkt auf dem Steckeraufsatz 43. In diesem Fall ist die Aussparung 7 entsprechend in der Steckerbuchse 44 angeordnet, so dass eine mögliche Betätigung des Schalters SW1 nur bei aufgebrachtem speziellem Steckerteil möglich ist. Zudem wird bei Verwendung eines herkömmlichen Steckerkabels, welches in die Steckerbuchse 44 eingesteckt werden könnte, die Betätigung des Schalters SW1 ausgeschlossen.

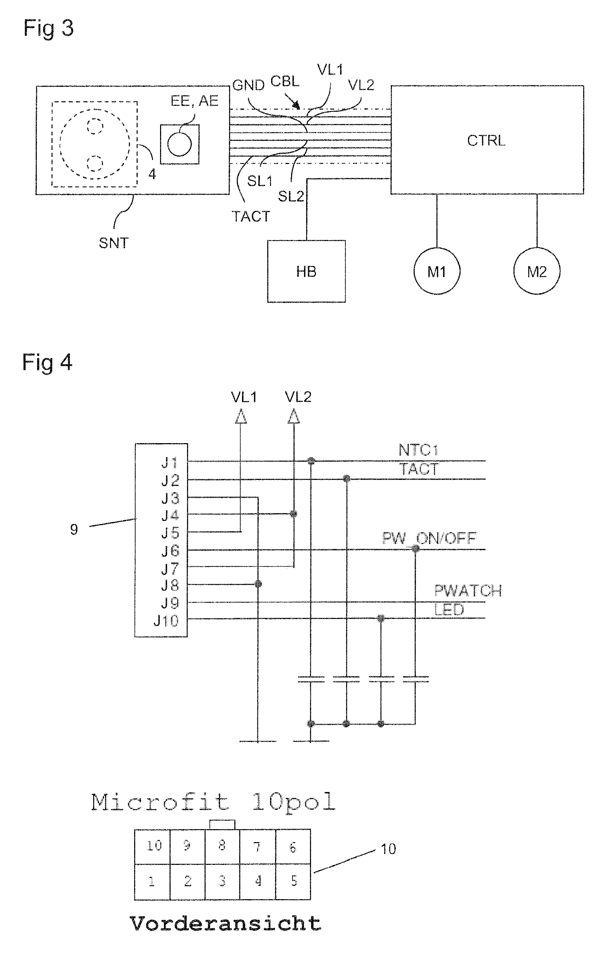

Figur 3 zeigt ein Steckernetzteil SNT, das ausgangsseitig mit einer Steuerung CTRL für ein elektrisch verstellbares Möbel verbunden ist. An die Steuerung CTRL sind beispielhaft ein erster und ein zweiter Motor M1, M2 angeschlossen, welche beispielsweise eine Höhenverstellung eines Tisches oder eines Bettes bewirken können. Ferner ist an die Steuerung CTRL ein Handbedienteil HB angeschlossen, über das ein Benutzer der Steuerung eine Bedienung vornehmen kann.

Das Steckernetzteil SNT, das beispielsweise wie in den Ausführungsformen zu Figur 1 und Figur 2 ausgeführt sein kann, weist ein beispielhaft dargestelltes Steckerteil 4 auf. Ferner ist ein Eingabeelement und Ausgabeelement EE, AE vorgesehen. Das Steckernetzteil SNT ist an die Steuerung CTRL über ein Kabel CBL angeschlossen, das eine erste und eine zweite Versorgungsleitung VL1, VL2, eine Masseleitung GND sowie eine erste und eine zweite Signalleitung SL1, SL2 aufweist.

Wie zuvor erwähnt können über die zweite Stufe 22 des Schaltnetzteils 2 auch mehrere Gleichspannungen erzeugt werden. Beispielsweise wird über die erste Versorgungsleitung VL1 eine erste Gleichspannung und über die zweite Versorgungsleitung VL2 eine zweite Gleichspannung an die Steuerung abgegeben. Beispielsweise wird die erste Gleichspannung zur Versorgung der Elektronik der Steuerung CTRL verwendet, während die zweite Gleichspannung von der Steuerung CTRL zum Betrieb der Motoren M1, M2 verwendet wird. Über die Signalleitungen SL1, SL2 können logische und/oder analoge Signale zwischen dem Steckernetzteil SNT und der Steuerung CTRL übertragen werden. Die Signalleitungen SL1, SL2 können somit als serielle und/oder parallele Datenleitungen verwendet werden.

Das Eingabeelement EE ist beispielsweise als Taster ausgeführt, dessen Zustand über die erste und/oder zweite Steuerleitung SL1, SL2 an die Steuerung CTRL übertragen wird. Der Taster EE kann für verschiedene Funktionen wie zum Beispiel eine Notabsenkung eines Bettes bei einem Netzspannungsausfall, bei dem lediglich eine Notstromversorgung aktiv ist, oder für eine Kanalauswahl bei einer Steuerung verwendet werden, bei der eine Bedieneinrichtung HB über einen wählbaren Funkkanal oder einen Infrarotkanal mit der Steuerung CTRL kommuniziert.

Das Anzeigeelement AE ist in diesem Ausführungsbeispiel als eine Beleuchtung des Tasters EE ausgeführt. Die Beleuchtung kann beispielsweise über eine Glühlampe oder eine Leuchtdiode erfolgen. In einer Ausführungsform wird die Strahlung einer oder mehrerer Leuchtdioden über einen Lichtleiter an das Anzeigeelement AE geführt. Über ein Steuersignal, das wiederum über die erste und/oder zweite Signalleitung SL1, SL2 von der Steuerung CTRL übertragen wird, wird festgelegt, ob das Anzeigeelement AE leuchten soll oder nicht.

In weiteren Ausführungsbeispielen können das Eingabeelement EE und das Anzeigeelement AE auch getrennt voneinander im Schaltnetzteil vorgesehen werden. Des Weiteren können auch mehrere unabhängige Eingabeelemente und mehrere unabhängige Anzeigeelemente im Steckernetzteil SNT vorgesehen werden.

Figur 4 zeigt ein Ausführungsbeispiel einer Schnittstelle 9 des Steckernetzteils SNT. Die Schnittstelle 9 weist hierbei zehn Anschlüsse J1 bis J10 auf, welche über entsprechend nummerierte Anschlüsse einer zehnpoligen Anschlussbuchse 10 aus dem Steckernetzteil SNT herausgeführt werden.

Der Anschluss J1 ist hierbei mit einer Signalleitung NTC1 und der Anschluss J2 mit einer Signalleitung TACT verbunden. Ferner sind die Anschlüsse J3 und J8 mit einem Massepotenzial verbunden. An den Anschlüssen J4 und J7 ist die zweite Versorgungsleitung VL2 zur Abgabe der zweiten Gleichspannung angeschlossen, während der Anschluss J5 mit der ersten Versorgungsleitung VL1 zur Abgabe der ersten Gleichspannung verbunden ist. Der Anschluss J6 ist mit einer Signalleitung PW_ON/OFF, der Anschluss J9 mit einer Signalleitung PWATCH und der Anschluss J10 mit einer Signalleitung LED verbunden. Des Weiteren sind die Signalleitungen NTC1, TACT, PW_ON/OFF und LED aus Gründen der Entstörung kapazitiv mit dem Masseanschluss gekoppelt.

Das Schaltnetzteil weist beispielsweise einen hier nicht dargestellten Temperatursensor auf, dessen Ausgangssignal über die Signalleitung NTC1 vom Steckernetzteil SNT an eine angeschlossene Steuerung CTRL abgegeben wird. Eine entsprechende Auswertung der über die Signalleitung NTC1 bereitgestellten Temperaturinformation erfolgt somit alternativ im Steckernetzteil oder in einer externen Schaltung.

Mit Verweis auf Figur 3 kann über die Signalleitung TACT ein logischer Zustand des Eingabeelements beziehungsweise Tasters EE nach außen abgegeben werden. Ähnlich wie bei der Temperaturinformation wird auch der logische Zustand des Tasters vorzugsweise außerhalb des Schaltnetzteils beziehungsweise des Steckernetzteils ausgewertet.

Das Schaltnetzteil 2 kann eine Detektionsschaltung aufweisen, welche das Vorliegen einer ausreichenden Netzwechselspannung am Eingang der ersten Stufe 21 überwacht. Beispielsweise wird beim Vorliegen der Netzwechselspannung eine Leuchtdiode eines Optokopplers angesteuert, deren Strahlung von einem Fototransistor empfangsseitig aufgenommen wird. Eine Spannungsversorgung des empfängerseitigen Fototransistors des Optokopplers kann dabei unabhängig von der Netzwechselspannung erfolgen, beispielsweise von einer Batterie oder einem im Betrieb des Schaltnetzteils geladenen Energiespeichers. Somit kann unabhängig vom Vorliegen einer ersten oder zweiten Gleichspannung am Ausgang des Schaltnetzteils über die Signalleitung TACT, welche an den Ausgang des genannten Optokopplers angeschlossen ist, eine Information an eine externe Schaltung gegeben werden, ob eine ausreichende Netzwechselspannung zur Verfügung steht.

Ferner kann der Optokoppler über die Signalleitung PWATCH ein Signal bei einer Unterbrechung oder einem Ausfall der Netzwechselspannung abgeben. Das PWATCH-Signal veranlasst, dass die Betriebsparameter des Steckernetzteils bzw. der Spannungsversorgung des elektronischen Systems gespeichert werden, so dass bei einer Wiederaufnahme des ordnungsgemäßen Betriebs der zuletzt eingestellte Betriebszustand übernommen wird.

Über die Signalleitung LED kann ein Steuersignal von außen zur Ansteuerung des Anzeigeelements AE zugeführt werden.

Da für die Zuführung beziehungsweise Bereitstellung der genannten Signale und Spannungen lediglich der Anschluss eines Steckers an die Anschlussbuchse 10 notwendig ist, ist der Installationsaufwand beim Aufbau eines Systems, wie es beispielsweise in Figur 3 gezeigt ist, gering.

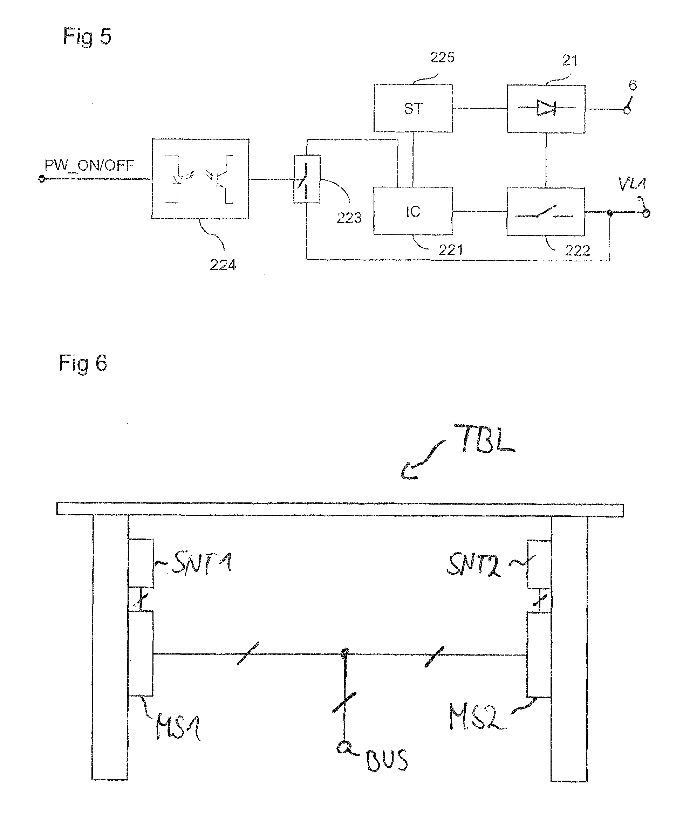

Über die Steuerleitung PW_ON/OFF kann dem Steckernetzteil ein Signal zugeführt werden, welches das Schaltnetzteil in einen Ruhebetriebszustand steuert. Ein mögliches Prinzip, einen derartigen Ruhebetriebszustand zu realisieren, ist beispielhaft in Figur 5 dargestellt.

In dem Blockschaltbild in Figur 5 sind ein Optokoppler 224, der eingangsseitig mit der Steuerleitung PW_ON/OFF und ausgangsseitig mit einem Schaltmittel 223 verbunden ist, ein Schaltreglerbaustein 221, ein Schaltmittel 222, eine Start-up-Schaltung 225 und die erste Stufe 21 dargestellt. Die Start-up-Schaltung 225 ist eingangsseitig mit der ersten Stufe 21 verbunden, welche, wie zuvor beschrieben, elektrisch mit Stiften 6 zur Zuführung der Netzwechselspannung gekoppelt ist. Über die Start-up-Schaltung 225 wird eine Versorgungsspannung geringer Leistung für den Baustein 221 bereitgestellt. Im Übrigen wird der Baustein 221 über die erste Gleichspannung auf der ersten Versorgungsleitung VL1 beziehungsweise einer daraus abgeleiteten Spannung versorgt, wobei die Versorgung über das Schaltmittel 223 zu- oder abgeschaltet werden kann.

Im regulären Betrieb, also einem Normal- oder Leistungsbetrieb, ist das Schaltmittel 223 geschlossen, so dass eine dauerhafte Versorgung des Bausteins 221 erfolgt. In diesem Betriebszustand steuert der Baustein 221 das Schaltmittel 222 an, so dass dieses aus der von der ersten Stufe 21 bereitgestellten Zwischenspannung unter anderem die erste Gleichspannung erzeugt. Eine Versorgung des Bausteins 221 durch die Start-up-Schaltung 225 ist in dieser Betriebsart nicht notwendig.

Wenn das Schaltnetzteil durch ein entsprechendes Signal auf der Signalleitung PW_ON/OFF in einen Ruhebetriebszustand gesteuert werden soll, wird das Schaltmittel 223 geöffnet, so dass der Baustein 221 nicht dauerhaft versorgt ist. Eine Ansteuerung des Schaltmittels 222 ist in diesem Betriebszustand nur über einen beschränkten Zeitraum möglich, da die von der Start-up-Schaltung 225 bereitgestellte Energie nicht für einen dauerhaften Schaltbetrieb des Bausteins 221 ausreicht. Entsprechendes ist vorgesehen, wenn das Schaltnetzteil durch ein Signal auf der Signalleitung PWATCH veranlasst wird, die aktuellen Betriebsparameter zu speichern und in den Ruhebetriebszustand gesteuert zu werden.

Anders ausgedrückt arbeitet der Baustein 221 im Ruhebetriebszustand im Taktbetrieb. Dieser Taktbetrieb funktioniert mithilfe der Start-up-Schaltung 225, welche den Baustein 221 kurz hochfahren lässt und nach kurzer Zeit wieder stoppt, weil keine Versorgung des Bausteins 221 über die erste Gleichspannung vorhanden ist. Der Baustein 221 wird also periodisch initialisiert und wieder abgeschaltet.

Im Gegensatz zu einem Leerlauf im Leistungsbetriebszustand, bei dem lediglich keine Leistung über die erste Gleichspannung abgenommen wird, aber dennoch Verlustleistung durch Umschaltvorgänge entsteht, wird bei einem Leerlauf im Ruhebetriebszustand die Leistungsaufnahme der Schaltungsanordnung deutlich reduziert, da die genannten Schaltverluste nicht auftreten. Während des Ruhebetriebszustands gibt das Schaltnetzteil zwar nach außen eine Spannung ab, die unter Umständen auch ausreicht, eine Elektronik einer angeschlossenen Steuerung zu versorgen, nicht aber den Leistungsteil. Anders ausgedrückt wird mit Verweis auf Figur 3 beispielsweise eine erste Gleichspannung zur Versorgung der Elektronik der Steuerung CTRL abgegeben, während die zweite Gleichspannung zur Versorgung der Motoren M1, M2 nicht oder nur mit nicht ausreichender Leistung abgegeben wird. Um den Normalbetrieb oder Leistungsbetrieb wieder aufzunehmen, ist es erforderlich, dass das Schaltnetzteil 2 über die Steuerleitung PW_ON/OFF wieder aktiviert wird.

Mit dem beschriebenen Ruhebetriebszustand kann somit der Leistungsbedarf des Schaltnetzteils so reduziert werden, dass beispielsweise bestimmte gesetzliche Umweltnormen wie zum Beispiel Green Label erfüllt werden.

Figur 6 zeigt ein Ausführungsbeispiel eines elektrisch höhenverstellbaren Tisches TBL, bei dem an jedem der beiden Tischbeine eine Motorsteuerung MS1, MS2 und Steckernetzteile SNT1, SNT2 entsprechend der zuvor beschriebenen Ausführungsbeispiele vorgesehen sind. Die Motorsteuerungen MS1, MS2 sind hierbei an ein Bussystem BUS angeschlossen. Des Weiteren ist die erste Motorsteuerung MS1 mit dem Steckernetzteil SNT1 und die zweite Motorsteuerung MS2 mit dem Steckernetzteil SNT2 verbunden. Insbesondere umfasst die Verbindung der Steckernetzteile SNT1, SNT2 an die Motorsteuerungen MS1, MS2 neben einer Spannungsversorgung auch einen Anschluss an das Bussystem BUS. Bei mehr als zwei Tischbeinen umfasst ein Ausführungsbeispiel für jedes Tischbein eine Motorsteuerung und ein Steckernetzteil. Natürlich ist alternativ auch eine Ausführung mit nur einem zentralen Steckernetzteil zur Versorgung aller Motorsteuerungen vorgesehen.

Das oder die Steckernetzteile, SNT1, SNT2 gemäß Figur 6, weisen hierbei beispielsweise spezielle Mikrocontroller auf, welche über den BUS mit den angeschlossenen Motorsteuerungen kommunizieren können. Darüber hinaus ist es auch möglich, dass die Steckernetzteile über den Bus mit den anderen an den Bus angeschlossenen Geräten kommunizieren. Beispielsweise ist an das Bussystem BUS eine nicht dargestellte zentrale Steuerung angeschlossen, welches über den Bus BUS Steuerdaten an die Motorsteuerungen MS1, MS2 und/oder die Steckernetzteile SNT1, SNT2 sendet. Beispielsweise kann von einer derartigen zentralen Steuerung ein Steuersignal an die Steckernetzteile SNT1, SNT2 gegeben werden, in dem zuvor beschriebenen Ruhebetriebszustand zu schalten.

Zur Kommunikation über das Bussystem BUS weist der Mikrocontroller beispielsweise eine serielle Schnittstelle mit entsprechenden Sende- und Empfangsleitungen auf.

## Patentansprüche

1. Steckernetzteil mit einem Gehäuse (1) und einem im Gehäuse (1) angeordneten Schaltnetzteil (2), wobei
- das Schaltnetzteil (2) eine erste Stufe (21), die zur Gleichrichtung einer Netzwechselspannung eingerichtet ist, und eine zweite Stufe (22) umfasst, die zur Abgabe wenigstens einer aus der gleichgerichteten Netzwechselspannung erzeugten Gleichspannung eingerichtet ist;
- die erste Stufe (21) einen elektromechanischen Schalter (SW1) aufweist, über den ein erster Netzspannungsbereich oder ein zweiter Netzspannungsbereich auswählbar ist;
- das Gehäuse (1) eine Aufnahme (3) für ein Steckerteil (4) aufweist;
- die Netzwechselspannung der ersten Stufe (21) über die Steckerbuchse (44) und einen darin aufgenommenen Steckeraufsatz (43) eines jeweils aufgenommenen Steckerteils (4) zuführbar ist;
- die Aufnahme (3) eingerichtet ist zur Aufnahme eines Steckerteils aus der Gruppe eines Steckerteils (4) für den ersten Netzspannungsbereich, welches keinen Zapfen (8) aufweist, und eines Steckerteils (4) für den zweiten Netzspannungsbereich, welches einen Zapfen (8) aufweist
**dadurch gekennzeichnet dass**;
- die Aufnahme (3) eine Steckerbuchse (44) und eine von der Steckerbuchse (44) beabstandete Aussparung (7) aufweisst; und dass
- die Aussparung (7) geeignet ist, einen Zapfen (8) eines aufgenommenen Steckerteils (4) derart aufzunehmen, dass der Zapfen (8) durch die Aussparung (7) in das Gehäuse (1) eindringt, und dass der Schalter (SW1) durch den aufgenommenen Zapfen (8) innerhalb des Gehäuses (1) betätigt wird.

2. Steckernetzteil nach Anspruch 1,
bei dem die Aussparung (7) derart angeordnet ist, dass die Aussparung (7) durch ein aufgenommenes Steckerteil (4) abgedeckt ist.

3. Steckernetzteil nach Anspruch 1 oder 2,
bei der die erste Stufe (21) eingerichtet ist, in einem offenen Zustand des Schalters (SW1) eine Gleichrichtung einer Netzwechselspannung aus dem ersten Netzspannungsbereich ohne Spannungsverdopplung durchzuführen und in einem geschlossenen Zustand des Schalters (SW1) eine Gleichrichtung einer Netzwechselspannung aus dem zweiten Netzspannungsbereich mit Spannungsverdopplung durchzuführen.

4. Steckernetzteil nach Anspruch 3,
bei dem der erste Netzspannungsbereich höher als der zweite Netzspannungsbereich ist.

5. Steckernetzteil nach einem der Ansprüche 1 bis 4,
bei der die Aufnahme (3) eingerichtet ist, das Steckerteil (4) mittels einer Verbindung (41, 42) am Gehäuse (1) zu befestigen.

6. Steckernetzteil nach einem der Ansprüche 1 bis 5,
ferner umfassend eine Schnittstelle (9) mit wenigstens einer Versorgungsleitung (VL1, VL2) zur Abgabe der wenigstens einen Gleichspannung und mit wenigstens einer Signalleitung (SL1, SL2).

7. Steckernetzteil nach Anspruch 6,
ferner umfassend wenigstens ein Eingabeelement (EE), dessen Zustand über die wenigstens eine Signalleitung (SL1, TACT) abgebbar ist.

8. Steckernetzteil nach Anspruch 6 oder 7,
ferner umfassend wenigstens ein Anzeigeelement (AE), das über die wenigstens eine Signalleitung (SL2, LED) ansteuerbar ist.

9. Steckernetzteil nach einem der Ansprüche 6 bis 8,
ferner umfassend einen Mikrocontroller, der eingerichtet ist, über die wenigstens eine Signalleitung (SL1, SL2) an ein Bussystem (BUS) angeschlossen zu werden.

10. Steckernetzteil nach einem der Ansprüche 6 bis 9,
bei dem das Schaltnetzteil (2) eingerichtet ist, in einen Ruhebetriebszustand gesteuert zu werden, wobei die Ansteuerung über die wenigstens eine Signalleitung (PW_ON/OFF) erfolgt.

11. Steckernetzteil nach einem der Ansprüche 6 bis 10,
ferner umfassend wenigstens ein Sensorelement, dessen Zustand über die wenigstens eine Signalleitung (NTC1, PWATCH) abgebbar ist.

12. Steckernetzteil nach einem der Ansprüche 6 bis 11,
ferner umfassend eine Anschlussbuchse (10), über die sämtliche Leitungen der Schnittstelle (9) aus dem Gehäuse (1) herausgeführt werden.

13. Steckernetzteil nach einem der Ansprüche 1 bis 12,
das für eine Spannungsversorgung eines elektronischen Systems (CTRL) eingerichtet ist, welches zur Verstellung eines verstellbaren Möbels (TBL) und/oder zur Steuerung eines in ein Möbel eingebauten Verbrauchers geeignet ist.

## Claims

1. Plug-in power supply unit having a housing (1) and a switched-mode power supply unit (2) arranged in the housing (1),
- the switched-mode power supply unit (2) comprising a first stage (21) which is set up to rectify a mains AC voltage, and a second stage (22) which is set up to emit at least one DC voltage generated from the rectified mains AC voltage;
- the first stage (21) having an electromechanical switch (SW1) which can be used to select a first mains voltage range or a second mains voltage range;
- the housing (1) having a receptacle (3) for a plug part (4);
- the mains AC voltage being able to be supplied to the first stage (21) via the plug socket (44) and a plug attachment (43) of a respectively received plug part (4), which plug attachment is received in the plug socket;
- the receptacle (3) being set up to receive a plug part from the group of a plug part (4) for the first mains voltage range which does not have a pin (8) and a plug part (4) for the second mains voltage range which has a pin (8),
**characterized in that**
- the receptacle (3) has a plug socket (44) and a recess (7) spaced apart from the plug socket (44); and **in that**
- the recess (7) is suitable for receiving a pin (8) of a received plug part (4) in such a manner that the pin (8) enters the housing (1) through the recess (7), and **in that** the switch (SW1) is actuated by the received pin (8) inside the housing (1).

2. Plug-in power supply unit according to Claim 1,
in which the recess (7) is arranged in such a manner that the recess (7) is covered by a received plug part (4).

3. Plug-in power supply unit according to Claim 1 or 2,
in which the first stage (21) is set up to rectify a mains AC voltage from the first mains voltage range without voltage doubling in an open state of the switch (SW1) and to rectify a mains AC voltage from the second mains voltage range with voltage doubling in a closed state of the switch (SW1).

4. Plug-in power supply unit according to Claim 3,
in which the first mains voltage range is higher than the second mains voltage range.

5. Plug-in power supply unit according to one of Claims 1 to 4,
in which the receptacle (3) is set up to fasten the plug part (4) to the housing (1) by means of a connection (41, 42).

6. Plug-in power supply unit according to one of Claims 1 to 5,
also comprising an interface (9) having at least one supply line (VL1, VL2) for emitting the at least one DC voltage and having at least one signal line (SL1, SL2).

7. Plug-in power supply unit according to Claim 6, also comprising at least one input element (EE), the state of which can be emitted via the at least one signal line (SL1, TACT).

8. Plug-in power supply unit according to Claim 6 or 7,
also comprising at least one display element (AE) which can be controlled via the at least one signal line (SL2, LED).

9. Plug-in power supply unit according to one of Claims 6 to 8,
also comprising a microcontroller which is set up to be connected to a bus system (BUS) via the at least one signal line (SL1, SL2).

10. Plug-in power supply unit according to one of Claims 6 to 9,
in which the switched-mode power supply unit (2) is set up to be controlled into a quiescent operating state, in which case the control is effected via the at least one signal line (PW_ON/OFF).

11. Plug-in power supply unit according to one of Claims 6 to 10,
also comprising at least one sensor element, the state of which can be emitted via the at least one signal line (NTC1, PWATCH).

12. Plug-in power supply unit according to one of Claims 6 to 11,
also comprising a connection socket (10) via which all lines of the interface (9) are routed out of the housing (1).

13. Plug-in power supply unit according to one of Claims 1 to 12,
which is set up to supply voltage to an electronic system (CTRL) which is suitable for adjusting an adjustable item of furniture (TBL) and/or for controlling a load installed in an item of furniture.

## Revendications

1. Adaptateur secteur à fiche comprenant un boîtier (1) et une alimentation à découpage (2) disposée dans le boîtier (1), avec lequel
- l'alimentation à découpage (2) comprend un premier étage (21), lequel est conçu pour redresser une tension alternative de réseau, et un deuxième étage (22), lequel est conçu pour délivrer au moins une tension continue générée à partir de la tension alternative de réseau redressée ;
- le premier étage (21) possède un commutateur électromécanique (SW1) par le biais duquel peut être sélectionnée une première plage de tensions de réseau ou une deuxième plage de tensions de réseau ;
- le boîtier (1) possède un logement (3) pour une partie formant fiche (4) ;
- la tension alternative de réseau peut être acheminée au premier étage (21) par le biais de la douille de fiche (44) et d'un embout de fiche (43), logé dans celle-ci, d'une partie formant fiche (4) respectivement logée ;
- le logement (3) est conçu pour accueillir une partie formant fiche issue d'un groupe composé d'une partie formant fiche (4) pour la première plage de tensions de réseau, laquelle ne possède pas de tenon (8), et une partie formant fiche (4) pour la deuxième plage de tensions de réseau, laquelle possède un tenon (8),
**caractérisé en ce que**
- le logement (3) possède une douille de fiche (44) et un évidement (7) espacé de la douille de fiche (44) ; et **en ce que**
- l'évidement (7) est adapté pour accueillir un tenon (8) d'une partie formant fiche (4) accueillie de telle sorte que le tenon (8) pénètre dans le boîtier (1) à travers l'évidement (7) et **en ce que** le commutateur (SW1) est actionné par le tenon (8) accueilli à l'intérieur du boîtier (1).

2. Adaptateur secteur à fiche selon la revendication 1, avec lequel l'évidement (7) est disposé de telle sorte que l'évidement (7) est recouvert par une partie formant fiche (4) accueillie.

3. Adaptateur secteur à fiche selon la revendication 1 ou 2, avec lequel le premier étage (21) est conçu pour, dans un état ouvert du commutateur (SW1), effectuer un redressement d'une tension alternative de réseau de la première plage de tensions sans doublage de la tension et, dans un état fermé du commutateur (SW1), effectuer un redressement d'une tension alternative de réseau de la deuxième plage de tensions avec doublage de la tension.

4. Adaptateur secteur à fiche selon la revendication 3, avec lequel la première plage de tensions est supérieure à la deuxième plage de tensions.

5. Adaptateur secteur à fiche selon l'une des revendications 1 à 4, avec lequel le logement (3) est conçu pour fixer la partie formant fiche (4) au boîtier (1) au moyen d'une liaison (41, 42).

6. Adaptateur secteur à fiche selon l'une des revendications 1 à 5, comprenant en outre une interface (9) munie d'au moins une ligne d'alimentation (VL1, VL2) destinée à délivrer l'au moins une tension continue et dotée d'au moins une ligne de signal (SL1, SL2).

7. Adaptateur secteur à fiche selon la revendication 6, comprenant en outre un élément de saisie (EE) dont l'état peut être délivré par le biais de l'au moins une ligne de signal (SL1, TACT).

8. Adaptateur secteur à fiche selon la revendication 6 ou 7, comprenant en outre au moins un élément indicateur (AE) qui peut être commandé par le biais de l'au moins une ligne de signal (SL2, LED).

9. Adaptateur secteur à fiche selon l'une des revendications 6 à 8, comprenant en outre un microcontrôleur qui est conçu pour être raccordé à un système de bus (BUS) par le biais de l'au moins une ligne de signal (SL1, SL2).

10. Adaptateur secteur à fiche selon l'une des revendications 6 à 9, avec lequel l'alimentation à découpage (2) est conçue pour être commandée dans un état opérationnel de repos, la commande s'effectuant par le biais de l'au moins une ligne de signal (PW_ON/OFF).

11. Adaptateur secteur à fiche selon l'une des revendications 6 à 10, comprenant en outre au moins un élément de détection dont l'état peut être délivré par le biais de l'au moins une ligne de signal (NTC1, PWATCH).

12. Adaptateur secteur à fiche selon l'une des revendications 6 à 11, comprenant en outre une douille de raccordement (10) par le biais de laquelle toutes les lignes de l'interface (9) sont amenées à l'extérieur du boîtier (1).

13. Adaptateur secteur à fiche selon l'une des revendications 1 à 12, lequel est conçu pour une alimentation électrique d'un système électronique (CTRL) qui est conçu pour le positionnement d'un meuble positionnable (TBL) et/ou pour la commande d'un consommateur intégré dans un meuble.
